# EUROPEAN PATENT APPLICATION

(11) **EP 4 368 753 A1**
(43) Date of publication of application: **15.05.2024**
(21) Application number: 22206114.5
(22) Date of filing: 08.11.2022
(51) Int. Cl.: D01F 2/02, D01D 5/06, C08B 1/08, C08B 16/00

(54) **A FABRIC WITH REGENERATED CELLULOSE**

(71) Applicant: TreeToTextile AB, 101 23 Stockholm (SE)
(72) Inventor: ALNEMO, Ida, 163 54 SPÅNGA (SE)
(74) Representative: Ström & Gulliksson AB

(57) **Abstract**

A fabric comprising cellulosic fibers regenerated in an alkaline spin bath. The fabric has good resistance to surface pilling. Further, it has improved color absorbing properties and good color fastness.

## Description

### Field of the invention

The present invention relates to a cellulosic fabric, such as a knitted or a woven fabric, providing for better sustainability of fabrics. The fabric is less prone to form pills. Further, the fabric has improved color absorbing properties and good color fastness.

### Background

Different fibers have different application areas in the textile industry. Historically, fibers used in textiles have been natural fibers originating from plants (cellulose, e.g. cotton), animals (protein, e.g. wool), or soil (minerals, e.g. asbestos).

Cotton (i.e. plant based fibers) has for a long time been the biggest natural fiber used in the textile industry. With about 24.7 million annual tonnes, it had a market share of approximately 22% of global fiber production in 2021.

Synthetic fibers have dominated the fiber market since the mid-1990s, when they overtook cotton volumes. With around 72 million annual tonnes of synthetic fibers, this fiber category made up approximately 64% of the global fiber production in 2021.

Man-made cellulosics fibers (MMCFs), with a global production volume of around 7.2 million annual tonnes, had a market share of around 6.4% in 2021.The global MMCF production volume has more than doubled from around 3 million tonnes in 1990 to approximately 7.2 million tonnes in 2021 (including viscose, acetate, lyocell, modal, and cupro), and is expected to further grow in the coming years.

Fabrics made from cellulosic fibers (natural as well as man-made) find use in variety of applications. Typical high volume applications are woven or knitted products that come in close contact to the skin, e.g. plain weave bed sheets and single jersey t-shirts.

Apart from natural fibers, like cotton, fibers, also man-made cellulosic fibers, like viscose, lyocell and modal fibers, are used in the textile industry. Viscose, lyocell and modal fibers, apart from being an alternative to cellulosic fibers from another source, may provide fabrics with other properties, like increased drapability, luster, and moisture regain.

However, a common problem with fabrics comprising natural cellulosic fibers as well as man-made cellulosic fibers in the art, especially knitted fabrics, are their tendency to pilling. This affects the hand feel as well as the appearance of the fabric negatively which contributes to rejections of textile products by the user, resulting in impaired sustainability.

The EU-commission has in the Outline of the Commission proposal for Ecodesign for Sustainable Products Regulation identified that possible eco-design requirements for textiles comprise providing textiles having resistance to pilling and abrasion, as well as color fastness.

Another concern in the textile industry in relation to eco-design is coloring. Wet processes, like coloring of textiles, are one of the processes in the textile industry having the largest impact on the environment. It would be thus be desirable to provide cellulosic textiles having improved color absorbing properties, as this would allow for reducing the amount of dyestuff used; whereby the impact on the environment could be reduced. However, in order to take advantage of the improved color absorbing properties, colored textile would still have to have good color fastness (e.g. rubbing fastness, perspiration fastness, washing fastness, and light fastness).

Thus, there is a need in the art for a fabric comprising cellulosic fibers, which has improved resistance to pilling. Further, it would be preferred for the textile to have improved color absorption in order to reduce the amount dyestuff used in coloring of textiles.

### Summary of the invention

According to a first aspect of the invention there is provided a fabric comprising cellulosic fibers regenerated in an alkaline spin bath. It has unexpectedly been found that a fabric comprising cellulosic fibers regenerated in an alkaline spin bath have increased color absorbing properties, i.e. it absorbs more of a coloring dye, such as a reactive dye, and/or a pigment used in textile coloring. This is advantageous, as less dyestuff can be used to provide a fabric with a given color. It was further found that a fabric, such as a woven or knitted fabric, comprising cellulosic fibers regenerated in an alkaline spin bath, are less prone to pilling. As recognized in the art, formation of pills is one of the main reasons for textiles and garments being discarded. Providing a garment with improved pilling resistance is of interest, as it would increase the user phase of textiles and garments and thereby provide more sustainable textiles and garments.

The cellulosic fibers regenerated in an alkaline spin bath used to provide the fabric, be it a woven, knitted or non-woven fabric, may have a linear density of 0.5 to 3.0 dtex, such as 0.8 to 2.0 dtex. Whereas the cellulosic fibers regenerated in an alkaline spin bath may be filaments, they are typically staple fibers. In woven or knitted fabrics, the staple fibers are spun into a yarn used in the manufacture of the fabric, such as by weaving or knitting. As recognized in the art, the yarn count depends on the manufacturing process as well as the intended use of the fabric.

Cellulosic fibers regenerated in an alkaline spin bath represents a new type of man-made cellulosic fibers being distinct from existing generic man-made cellulosic fibers in the art, such as viscose fibers, lyocell fiber, modal fibers, and cupro fibers. They are further distinct from natural cotton fibers.

Various aspects of the provision of cellulosic fibers regenerated in an alkaline spin bath have been described *inter alia* in WO 2022/112425, WO 2021/211046, WO 2020/231315, WO 2020/171767, WO 2018/169479, WO2017/178531, WO 2017/178532, WO 2016/177534, WO 2015/000820, and WO 2010/104458, which all are incorporated by reference. Especially, WO 2020/171767 and WO 2017/178531 are exemplary for the provision of cellulosic fibers regenerated in an alkaline spin bath.

The cellulosic fibers regenerated in an alkaline spin bath may be regenerated by spinning an alkaline, aqueous solution of cellulose - a spin dope - into the alkaline spin bath. In short, cellulose is dissolved in cold alkali to provide an alkaline spin dope. The spin dope is wet-spun into an alkaline spin bath comprising sodium carbonate (Na₂CO₃) or sodium sulfate (Na₂SO₄) to provide regenerated cellulosic fibers. Typically, the alkaline spin bath comprises sodium carbonate (Na₂CO₃).

According to an embodiment, the cellulosic fibers regenerated in an alkaline spin bath have been formed by dissolving cellulose in an alkaline solution comprising 5 to 12 wt.% sodium hydroxide, such as 6 to 10 wt.% sodium hydroxide, at a temperature of + 12°C or lower, such as at a temperature of -20°C to +10°C, -10°C to +5°C, or -5°C to +5°C, to form an alkaline spin dope. Subsequently, the alkaline spin dope is wet-spun into an alkaline spin bath comprising 14 to 32 wt.% sodium carbonate (Na₂CO₃), such as 16 to 24 wt.% sodium carbonate (Na₂CO₃) to provide the cellulosic fibers regenerated in an alkaline spin bath. The cellulose to be dissolved in the alkaline solution comprising 5 to 12 wt.% sodium hydroxide may have a DP of 140 to 600, such as 180 to 600, 200 to 400, 160 to 400, or 180 to 300. As can be seen, the cellulose to be dissolved has a fairly low degree of polymerization. Further or alternatively, it may have an intrinsic viscosity according to ISO 5351:2010 (E) of 115 to 450 ml/g, such as 150 to 450 ml/g, 190 to 300ml/g, 130 to 300 ml/g, or 140 to 230 ml/g. The alkaline cellulose spin dope may comprise 4 to 12 wt.%, such as 5 to 8 wt.% cellulose. In order to affect the solubility, the alkaline solution to dissolve the cellulose may comprise zinc oxide (ZnO). It may comprise 2.7 % by weight or less of zinc oxide (ZnO), such as 0.1 to 2.7 % ZnO by weight, or even 0.5 to 1.6 % ZnO by weight.

A wet, swollen tow is provided when the spin dope is spun into the coagulation bath. This tow of regenerated fibers may subsequently be withdrawn from the coagulation bath to provide cellulose fibers. After the cellulosic fibers have been regenerated, they are typically washed. They may be washed in a plurality of consecutive washing steps at alkaline conditions. The fibers may be washed at subsequently lower pH-value until the washing liquid has a pH value of less than 10. The pH-value will be subsequently lower, as NaOH and sodium carbonate (Na₂CO₃) is extracted from the fibers.

The cellulosic fibers regenerated in the alkaline spin bath are filaments. The filaments may be cut into staple fibers. According to an embodiment, the present fabric comprises staple fibers. The staple fibers may be 15 to 75 mm long, such as 20 to 50 mm long. If to be used in a non-woven fabric, they may be shorter.

The present fabric may comprise various amounts of cellulosic fibers regenerated in an alkaline spin bath. In some embodiments, the fabric essentially consists of cellulosic fibers regenerated in an alkaline spin bath, whereas in other embodiments the fabric comprises other fibers as well, such as man-made cellulosic fibers distinct from the cellulosic fibers regenerated in an alkaline spin bath, such as lyocell and/or viscose fibers, cotton fibers, and/or polyester fibers.

According to an embodiment, the fabric comprises at least 20 wt%, such as at least 50 wt%, 60 wt%, 70 wt%, 80 wt%, or 90 wt%, of cellulosic fibers regenerated in an alkaline spin bath. According to such an embodiment, the fabric may essentially consist of cellulosic fibers regenerated in an alkaline spin bath. If to provide a uniformly colored fabric, it may be preferred to provide a fabric essentially consisting of cellulosic fibers regenerated in an alkaline spin bath.

According to an embodiment, the fabric comprises cellulosic fibers regenerated in an alkaline spin bath and an additional fiber. According to a first option of this embodiment, the fabric comprises 1 to 50 wt% of the cellulosic fibers regenerated in an alkaline spin bath, i.e. the cellulosic fibers regenerated in an alkaline spin bath is typically not the major fiber in the fabric according to this option. The fabric may comprise 5 to 40 wt% or 10 to 40 wt% of the cellulosic fibers regenerated in an alkaline spin bath. According to this first option, the cellulosic fibers regenerated in an alkaline spin bath may be used to affect properties such as the resistance to pilling and/or the color absorption of a fabric. According to a second option of this embodiment, the fabric comprises 50 to 99 wt% % of the cellulosic fibers regenerated in an alkaline spin bath, i.e. the cellulosic fibers regenerated in an alkaline spin bath are the major fiber in the fabric according to this option. The fabric may comprise 70 to 97.5 wt% or 80 to 95 wt% of the cellulosic fibers regenerated in an alkaline spin bath. According to this second option, the cellulosic fibers regenerated in an alkaline spin bath may be supplemented by a second type of fibers, in an amount equal to or smaller than the amount of cellulosic fibers regenerated in an alkaline spin bath, to affect for example the structural integrity of the fabric. According to this embodiment, be it the first or second option thereof, the fabric may comprise further fibers selected from the group consisting of man-made cellulosic fibers distinct from the cellulosic fibers regenerated in an alkaline spin bath, such as lyocell and/or viscose fibers, cotton fibers, and polyester fibers.

As commonly is the case in the textile industry, the fabric may be colored. The fabric may thus comprise a dyestuff, such as a reactive dye. Given that cellulosic fibers regenerated in an alkaline spin bath have higher coloring absorbing properties than other man-made cellulosic fibers and cotton, coloring a fabric comprising another type of fiber, apart from the cellulosic fibers regenerated in an alkaline spin bath, may provide the fabric with a mélange effect upon coloring of the fabric. According to an embodiment, the fabric has been colored by a dyestuff, and comprises cellulosic fibers regenerated in an alkaline spin bath and further fibers distinct from the cellulosic fibers regenerated in an alkaline spin bath. The further fibers may be selected from the group consisting of man-made cellulosic fibers distinct from the cellulosic fibers regenerated in an alkaline spin bath, such as lyocell and/or viscose fibers, cotton fibers, and polyester fibers.

In a broad sense, the fabric may be any kind of fabric such as a knitted fabric, a woven fabric, or non-woven fabric. However, the fabric is typically a knitted fabric, such as a fabric having a jersey, rib or purl construction, or a woven fabric such as a fabric having a plain weave, twill and satin construction. According to an alternative embodiment, the fabric is a non-woven fabric.

According to an embodiment, the fabric is a circular knit fabric. The circular knit fabric may have single jersey construction. Circular knit fabrics are used in wide variety of garments, a typical example being T-shirts. Further examples include sweaters, polos, pikes, dresses, sweatpants, and fitted jersey bed sheets. Further, the fabric may be a flat knit fabric, or a warp knit fabric. Flat knit fabrics are mainly used for knitted jumpers, cardigans, slipovers. Warp knit fabrics are used in wide variety of garments and home textiles, typical examples being sportswear, underwear, lingerie and curtains. The warp knit fabric may be a tricot fabric.

According to an exemplary embodiment, the fabric is a fabric having a jersey construction, with a mass per unit area of 60 to 400 g/m² determined according to SS-EN 12127:1997 with a sampling procedure with load according to ISO 3801:1977. Further, its thickness may be 0.5 to 2 mm according to SS-EN ISO 9073-1: 1995. By using at least a portion of cellulosic fibers regenerated in an alkaline spin bath, the fabric's resistance to surface pilling may be improved. The fabric according to this exemplary embodiment may have a resistance to surface pilling of at least 3, preferably at least 4, as determined according to SS-EN ISO 12945-2:2020 in a Martindale apparatus after at least 5000 rubs, such as 7000 rubs. The yarn may be a Ne 16/1 to Ne100/1 ring spun yarn.

According to exemplary embodiment, the fabric is a woven fabric having a thread count (warp and weft) of 75 to 600 per square inch, such as a thread count of 100 to 400 per square inch. The woven fabric may be a woven fabric with plain weave construction. A woven fabric with plain weave construction may be a sheeting for bed-linen. The yarn used to produce the woven fabric according to this embodiment may be a Ne 12/1 to Ne100/1 ring spun yarn.

As explained herein above, cellulosic fibers regenerated in an alkaline spin bath are fibers that provide fabrics with improved resistance to surface pilling. According to an embodiment the cellulosic fibers regenerated in an alkaline spin bath are fibers that when tested by being incorporated in a flat knit fabric with a single jersey construction a mass per unit area of 275 to 295 g/m² determined according to SS-EN 12127:1997 with a sampling procedure with load according to ISO 3801:1977, and a thickness of 1.0 to 1.3 mm according to SS-EN ISO 9073-1: 1995, provides the flat knit fabric with a resistance to surface pilling of at least 3, preferably at least 4, as determined according to SS-EN ISO 12945-2:2020 in a Martindale apparatus after at least 5000 rubs, such as 7000 rubs. In such a fabric, the fibers may be present as a yarn with a yarn count of Ne 16/2.

According to a second aspect of the invention there is provided an article comprising the fabric described herein above. The article may be a home furnishing textile article, such as an article of bedding (e.g. a sheet, a quilt cover and/or pillow case), a blanket, a towel, a table cloth, a curtain, or a cover, or a garment, such as a T-shirt, a sweatshirt, a shirt, a blouse, a dress, underwear or a lingerie.

According to a second aspect of the invention there is provided for use of a cellulosic fiber regenerated in an alkaline spin bath in a fabric to provide the fabric with improved resistance to pilling. Aspects of the fiber as well as the fabric, described herein above, are equally applicable to such use. Especially, the fabric may be a knitted fabric, such as a knitted fabric having jersey construction, or a woven fabric.

According to a second aspect of the invention there is provided for use of a cellulosic fiber regenerated in an alkaline spin bath in a fabric to provide the fabric with improved color absorption. Aspects of the fiber as well as the fabric, described herein above, are equally applicable to such use. Especially, the fabric may be a knitted fabric, such as a knitted fabric having jersey construction, or a woven fabric.

Without further elaboration, it is believed that one skilled in the art may, using the preceding description, utilize the present invention to its fullest extent. The preceding preferred specific embodiments, as well as the succeeding examples, are, therefore, to be construed as merely illustrative and not limitative of the disclosure in any way whatsoever.

Although the present invention has been described above with reference to specific embodiments, it is not intended to be limited to the specific form set forth herein. Rather, the invention is limited only by the accompanying claims and other embodiments than the specific embodiments described above are equally possible within the scope of these appended claims.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous.

In addition, singular references do not exclude a plurality. The terms "a", "an", "first", "second" etc. do not preclude a plurality.

### Drawings

**Fig. 1** The photographs in Fig. 1 show a side view (Fig. 1a) and a cross-section (Fig. 1b) of cotton fibers;
**Fig. 2** The photographs in Fig. 2 show a side view (Fig. 2a) and a cross-section (Fig. 2b) of viscose fibers;
**Fig. 3** The photographs in Fig. 3 show a side view (Fig. 3a) and a cross-section (Fig. 3b) of modal fibers;
**Fig. 4** The photographs in Fig. 4 show a side view (Fig. 4a) and a cross-section (Fig. 4b) of cellulose fibers re-generated in an alkaline spin bath;
**Fig. 5** The table in Fig. 5 provides the complete data for testing of resistance to surface pilling; and
**Fig. 6** The diagram in Fig. 6 shows the relative color uptake of the inventive fabric and various fabrics in the art.

### Examples

In order to evaluate the properties of cellulose fibers regenerated in an alkaline spin bath from cellulose dissolved in cold alkali (herein denoted TTT fibers), such fibers were studied and compared to other cellulosic fibers (cotton, viscose and lyocell fibers) used as benchmark fibers.

The benchmark fibers were selected to represent fiber types produced in industrial scale and used in large scale on the market. The viscose fibers were produced in China, the lyocell fibers were produced in Europe and the cotton was grown in Africa.

For a conditioned single fiber (ISO 139:2005, (20 ±2)°C and (65 ±4) % RH), the linear density of the fibers used is shown in **Table 1**.

**Table 1 - linear density of tested fibers**

| **Fiber** | **Linear density (Titer)** |
|---|---|
| TTT fibers^{∗}: | 1.50 dtex |
| Viscose: | 1.40 dtex |
| Lyocell: | 1.31 dtex |
| Cotton: | 1.96 tex |

| | |
|---|---|
| ^{∗} *cellulose fibers regenerated in an alkaline spin bath from cellulose dissolved in cold alkali (cf. inter alia* WO 2022/112425*,* WO 2021/211046*,* WO 2020/231315 WO 2020/171767*,* WO 2018/169479*,* WO2017/178531*,* WO 2017/178532*,* WO 2016/177534*,* WO 2015/000820*, and* WO 2010/104458*)* | |

### Morphology

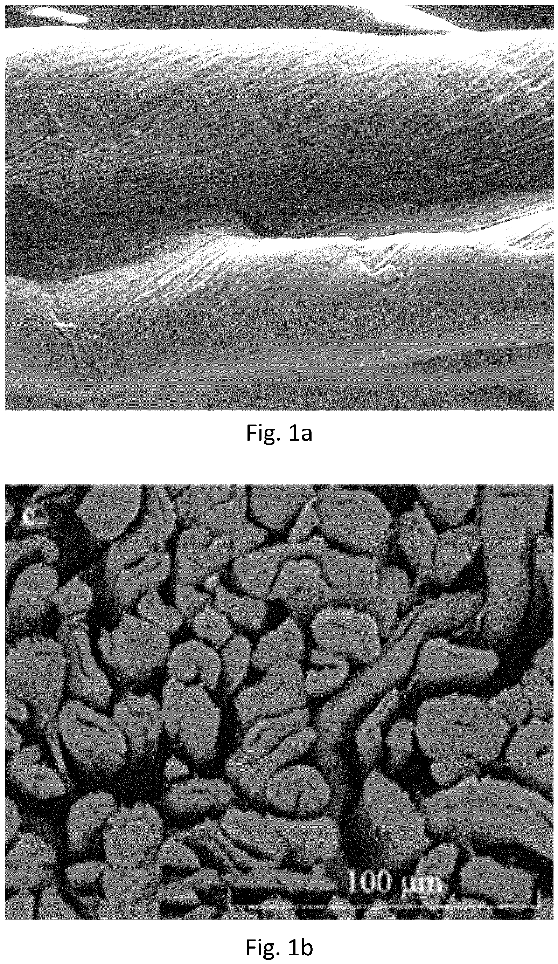

The morphology was studied in electron microscope. As can be seen in **Figs. 1** to **4**, the morphology differs between the fibers even though their chemical composition is essentially the same (all are cellulosic fibers).

### Cotton

In **Fig. 1**, microscopic pictures of cotton are shown. Cotton is a natural cellulosic fiber (Cellulose I / Native Cellulose) given its shape by nature. As can be seen in **Fig. 1b**, the cross section is flat and has a kidney like shape with a lumen in the center. Further, as can be seen in **Fig. 1a** the surface in rough and has lengthwise convolutions in the fiber axis direction.

### Viscose

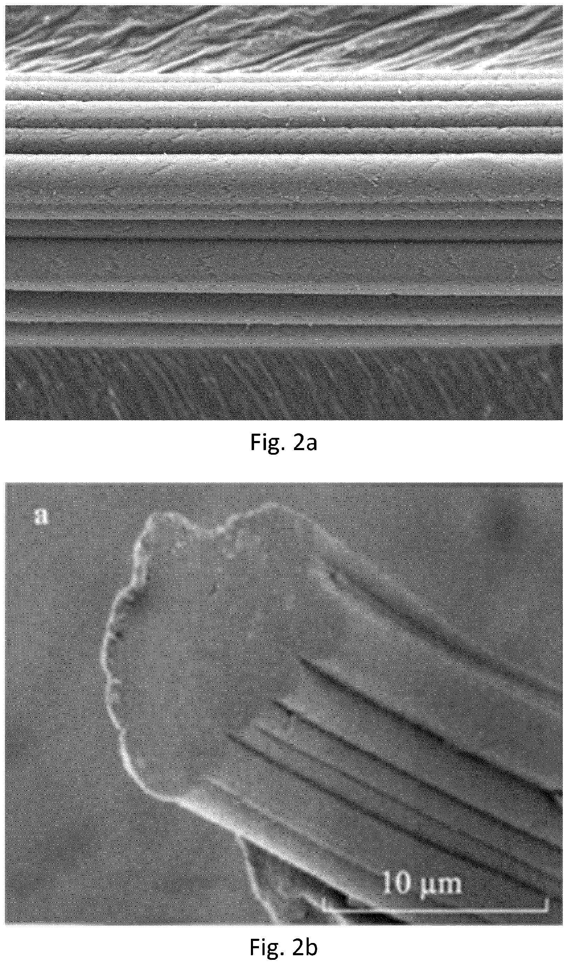

In **Fig. 2**, microscopic pictures of viscose fibers are shown. The viscose fiber is given its shape in the fiber spinning process. When the xantigenated alkaline spin dope enters the acidic spin bath the fiber surface instantly solidifies (giving the fiber an outer skin) and the inner part of the fiber collapses giving the fiber its final shape. As can be seen in **Fig. 2b**, the cross section therefore has an irregular petalous shape with several ridges in the fiber axis direction (cf. **Fig. 2a**).

Further, modal fibers (not shown) are produced in the same way as viscose fibers, but with different settings. Therefore, a modal fiber looks like a swollen (mercerized) viscose fiber having a smooth petal or bean like shape with less ridges in the fiber axis direction.

### Lyocell

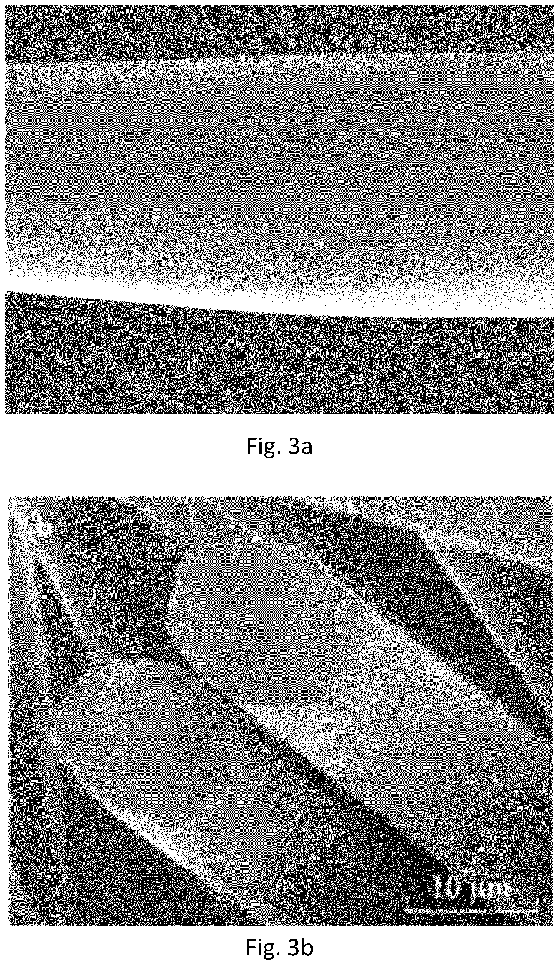

In **Fig. 3**, microscopic pictures of lyocell fibers are shown. The Lyocell fibers are given their shape in the fiber spinning process. When the spin dope enters the air gap (1-2cm) of the dry jet wet spinning process the fibers get their final shape. As can be seen in **Fig. 3b**, the cross section is circular, and the surface appearance is smooth (cf. **Fig. 3a**).

### Tree to Textile technology fiber

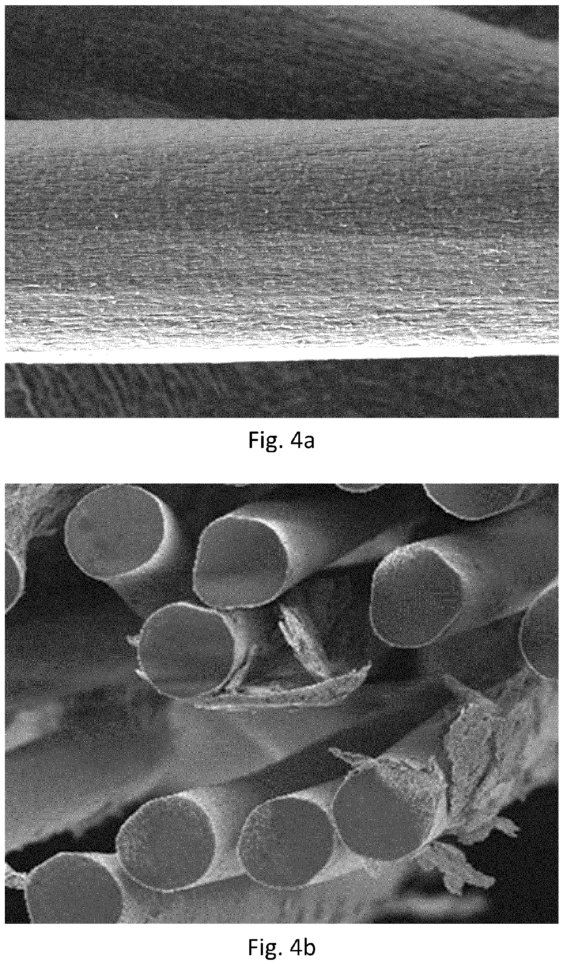

In **Fig. 4**, microscopic pictures of cellulose fibers regenerated in an alkaline spin bath are shown. Such fibers regenerated are given their shape in the fiber spinning process. When the cold alkaline spin dope enters the alkaline spin bath, comprising sodium carbonate, the fiber slowly transforms from its gel like structure into a solid fiber and eventually gets its final shape at the end of the washing process. The regeneration takes place during the gelation and precipitation. As can be seen in **Fig. 4b**, the cross section is circular like the one of lyocell (cf. **Fig. 3b**), but the surface appearance is rough and more cotton like (cf. **Fig. 4a****; NB** the flakes in the pictures are epoxy used to fix the fibers when performing SEM microscopy).

### Yarn

The fibers were opened (Ramella Opener 500 mm working width), carded (Ramella carding machine 800 mm working width), drafted (Stirolab Mesdan 6,1m/min) and ring spun (Sermantes spinning frame, T flange 1, 45 mm, Z direction, 600-850tmp) and plyed (Plyer for short fibers - 12 spindles, S direction, 360tmp) into yarns. Essentially the same settings were used for all fibers. The yarn count of the yarn is indicated in **Table 2**.

**Table 2 - yarn**

| **Fiber** | **Yarn count** |
|---|---|
| TTT fibers: | Ne 16/2 |
| Viscose: | Ne 16/2 |
| Lyocell: | Ne 16/2 |
| Cotton: | Ne 16/2 |

### Knitted fabric

The yarn was knitted on a whole garment computerized flat knit machine (Shima Seiki Mach2XS153, 15 GG) to provide a flat knit fabric with single jersey construction. The surface density and the thickness of the fabrics are given in **Table 3**. Mass per unit area was determined according to SS-EN 12127: 1997 for the single jersey fabric samples. The sampling procedure with load according to ISO 3801:1977. The thickness of single jersey fabric was determined according to SS-EN ISO 9073-1: 1995. Five test specimens were tested. A PTE thickness tester with standard presser-foot (0.5 kPa) was used.

**Table 3 - fabric density and thickness**

| **Fiber** | **Surface density** (mean 5 tests) | **Thickness** (mean 5 tests) |
|---|---|---|
| TTT fibers | 282 g/m² | 1.15 mm |
| Viscose | 228 g/m² | 1.03 mm |
| Lyocell | 270 g/m² | 1.04 mm |
| Cotton | 257 g/m² | 1.25 mm |

The general appearance for all samples after 10 washes was essentially the same (data not shown). As described below, *inter alia* the resistance to surface pilling and the coloring properties of the fabrics were evaluated.

### Example 1 - Resistance to surface pilling

Resistance to surface pilling of the fabrics were determined according to ISO 12945-2:2020 in a Martindale apparatus with 7000 rubs.
- Number of specimens: two (one for each abradant)
- Abradant: Test material and wool fabric
- Loading weight: 155 ±1 g.
- Number of observers: one (1)
- Viewing conditions: Light Cabinet Ortospectra 60, D65, worst angle.

**Table 4 - Resistance to surface pilling (7000 rubs)**

| **Fiber** | **Resistance to surface pilling - grade** |
|---|---|
| TTT fibers: | **4-5** |
| Viscose: | **1-2** |
| Lyocell: | **2** |
| Cotton: | **1** |

**Table 5 - Visual assessment of pilling - Grading scheme**

| **Appearance** | **Grade** |
|---|---|
| No change | **5** |
| Partially formed pills | **4** |
| Moderate pilling- pills of varying size and density partially covering the specimen surface | **3** |
| Distinct pilling- pills of varying size and density covering a large proportion of the specimen surface | **2** |
| Severe pilling- pills of varying size and density, covering the whole of the specimen surface | **1** |

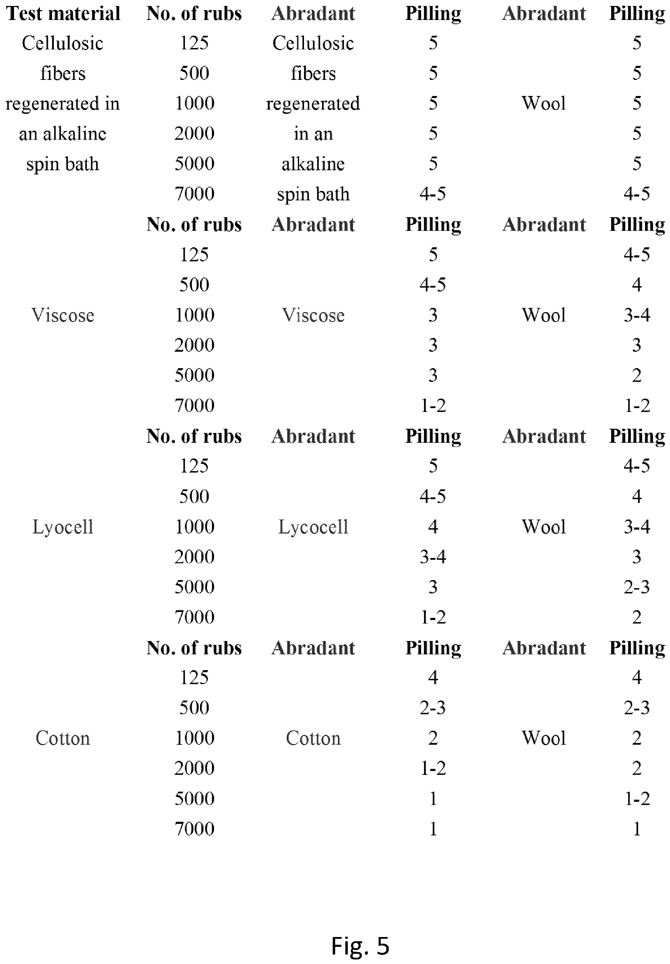

The complete data set for the resistance to surface pilling is given in **Fig. 5**.

As can been seen from **Table 4** and **Fig. 5**, the resistance to surface pilling is superior for fabric comprising cellulosic fibers regenerated in an alkaline spin bath compared to the other tested cellulosic fibers.

For washed fabrics (10 times) the resistance to surface pilling was somewhat improved. The fabric comprising cellulosic fibers regenerated in an alkaline spin bath were however still superior. The resistance to fuzzing for washed fabric comprising cellulosic fibers regenerated in an alkaline spin bath was also superior compared to the other tested cellulosic fibers. Similarly, the resistance to matting for washed fabric comprising cellulosic fibers regenerated in an alkaline spin bath was also higher compared to the other tested cellulosic fibers.

It should be noted that 7000 rubs represent very harsh conditions. Even a grade of three (3) would have been an excellent result after 7000 rubs. A grading of more than three (3) after 7000 rubs is a very unique result for a knitted fabric.

As known in the art, formation of pills is a complex process. Interestingly, the number of pills remains low for TTT fibers over the entire test cycle. This indicates that they provide the fabric with unique properties. Not only is the tendency to form pills low. Without being bound to any theory, it also seems that pills eventually formed (at least to some context they will inherently form) will be rapidly worn out.

In summary, from comparison trials made with fabrics comprising cellulosic fibers regenerated in an alkaline spin bath from cellulose dissolved in cold alkali, cotton fibers, viscose fibers or lyocell fibers, it can be concluded that cellulosic fibers regenerated in an alkaline spin bath provides fabric having a unique combination of fiber properties. Handfeel (drape), appearance (luster), comfort (moisture regain, elongation), and care (washability) places it (data not shown) between a natural cellulosic fiber, i.e. cotton fibers, and man-made cellulosic fibers, (i.e. viscose and lyocell fibers). In summary, cellulosic fibers regenerated in an alkaline spin bath are perceived as more cotton like than other man-made cellulosic fibers.

However, cellulosic fibers regenerated in an alkaline spin bath from cellulose dissolved in cold alkali have additional unique properties in their very good pilling resistance. Further, as described below, also the color uptake is improved with the color fastness still being good. These unique properties have impact on the application's longevity, its processability, the environmental footprint and the cost.

Further, when blending cellulosic fibers regenerated in an alkaline spin bath with other cellulosic fibers, the superiorities of the cellulosic fibers regenerated in an alkaline spin bath can bring extra enhancements to the resulting fiber blends (data not shown).

### Example 2 - coloring

The coloring properties of in total five fabrics were evaluated. The fabric were produced as described above.

### Fabric:

| | |
|---|---|
| **No.1** | Pre-washed Lyocell |
| **No. 2** | Scoured Cotton |
| **No. 3** | TTT Unwashed |
| **No. 4** | TTT Pre-washed |
| **No. 5** | Pre-washed Viscose |

### Pretreatment

In order to allow for coloring of the cotton fabric, it was pretreated with a scouring solution to remove the waxes inherently present in cotton. The scouring solution used to pre-treat the cotton fabric comprised Imerol NLF liq (1.5 ml/l), Lufibrol ANTOX liq (1.0 ml/l), and NaOH 50% (1.5 ml/l). The liquor ratio was 1:10. The fabric was scoured for 30 min. at 80°C, rinsed (warm and cold), and neutralized with Sirrix NE liq 0.5 ml/l.

Further, man-made cellulose fibers are typically provided with a spin-finish. These fibers were thus pre-washed to avoid the spin-finish affecting the outcome. However, in order to evaluate the need for pre-wash of TTT, an un-washed specimen was included.

### Coloring

The fabrics were separately colored in five colors (four different brown hues and one black). The coloring compositions used comprised different amounts and combinations of pigments and dyes, having different reactivity. The coloring compositions used are provided below:
1) **Brown 1/9 SD**: Drimaren HF-2GL (0.28 wt.%), Drimaren HF-6BL (0.35 wt.%), Blue HF-RL (0.22 wt.%), Leonil EHC liq (1 mg/l), Glauber salt (60 mg/ml), and soda (10 g/l);
2) **Brown 1/3 SD**: Drimaren HF-2GL (0.86 wt.%), Drimaren HF-6BL (1.05 wt.%), Blue HF-RL (0.66 wt.%)), Leonil EHC liq (1 mg/l), Glauber salt (70 mg/ml), and soda (15 g/l);
3) **Brown 1/1 SD**: Drimaren HF-2GL (2.6 wt.%), Drimaren HF-6BL (3.2 wt.%), Blue HF-RL (2.0 wt.%), Leonil EHC liq (1 mg/l), Glauber salt (70 mg/ml), and soda (20 g/l);
4) **Deep brown**: Drimaren Ultimate Amber HD (2.0 wt.%), Rubine HD (0.6 wt.%), Navy HD (1.5 wt.%), Leonil EHC liq (1 mg/l), Glauber salt (70 mg/ml), and soda (20 g/l);
5) **Black**: Drimaren Ultimate Amber HD (0.7 wt.%), Rubine HD (0.5 wt.%), Black HD (8.0 wt.%), Leonil EHC liq (1 mg/l), Glauber salt (90 mg/ml), and soda (20 g/l);

The fabrics were soaked in the coloring solutions (liquid color ration 1:10), heated to 60°C (1.5°C/min) and kept at 60°C for 90 minutes. Each fabric was soaked in a separate coloring bath. The fabrics were then rinsed at 25°C with water for 10 min and neutralized with acetic acid (0.5 mg/ml) for 10 minutes. Thereafter, the fabrics were soaped with Cyclanon XC-W (1.5 mg/l), by soaking them in the soap solution, heating them to 60°C (1.5°C/min) and keeping them at 60°C for 90 minutes. At last, the colored fabrics were rinsed at 25°C with water for 10 min.

No difference in color fastness (Color fastness to rubbing - ISO 105-X12:2016, color fastness to perspiration - ISO 105-E04:2013, color fastness to domestic and commercial laundering - ISO 105-C06:2010, or Color fastness to artificial light - ISO 105-B02:2015) could be found for the various fabrics, neither for the lighter colors, nor the darker.

It was however visually seen that the TTT-fabrics (fabric 3 and 4) were darker than the other corresponding fabrics, indicating that they more efficiently take up color. As no difference in color fastness is seen, the darker color of the TTT-fabrics is not the result of oversaturation.

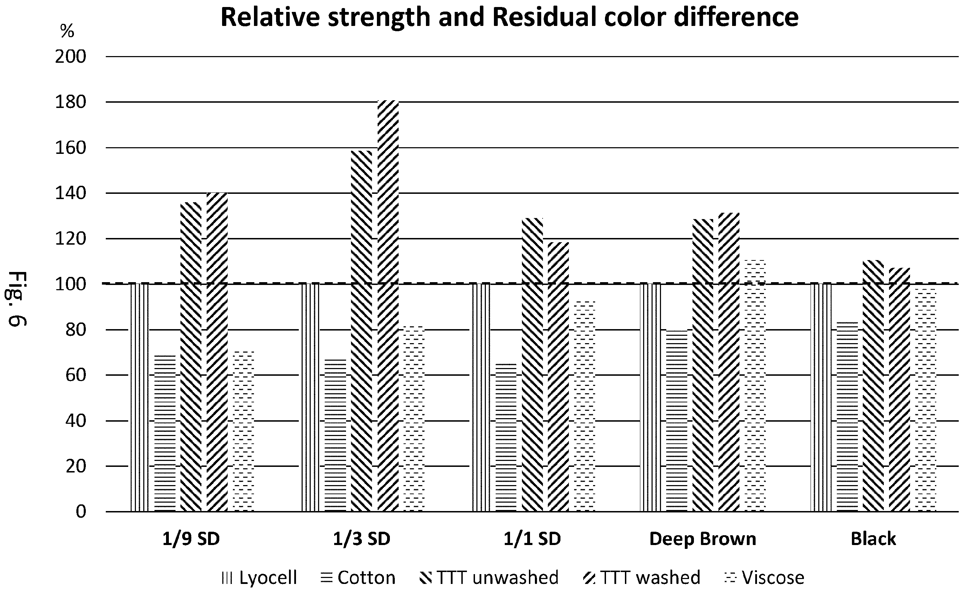

The color uptake was further measured by comparing the color yield of the different fabrics in the different recipes by colorimetric measurements. This is called "Relative strength and Residual color difference" and the results are given in **Table 6** and **Fig. 6**.

**Table 6 - Relative strength and Residual color difference**

| | **Lyocell** | **Cotton** | **TTT (unwashed)** | **TTT (washed)** | **Viscose** |
|---|---|---|---|---|---|
| **1/9 SD** | 100 | 69 | 136 | 140 | 71 |
| **1/3 SD** | 100 | 68 | 159 | 181 | 82 |
| **1/1 SD** | 100 | 66 | 129 | 118 | 92 |
| **Deep Brown** | 100 | 81 | 129 | 131 | 111 |
| **Black** | 100 | 84 | 111 | 107 | 99 |

In this trial, lyocell was set as benchmark (100%) as it absorbs color better than cotton and viscose, respectively. The color yield is then measured as the percentage (%) of the color of the benchmark lyocell fiber (<100% = lighter; and >100% = darker). For example, as can be seen in **Table 6**, in the Brown 1/3 SD recipe, the color yield of the washed TTT sample (181%) is higher than for any of the other cellulose fibers (lyocell: 100% (ref.), cotton: 68%, and viscose: 92%) when using the same recipe.

Interestingly, it was found that cellulosic fibers regenerated in an alkaline spin bath from cellulose dissolved in cold alkali have improved color uptake without suffering from impaired color fastness, often inherently linked to increased color uptake. In coloring cellulosic fibers regenerated in an alkaline spin bath, less coloring agent is thus needed.

The results were confirmed in subsequent tests, wherein a lyocell and a TTT fabric, respectively, were colored to the same yield (i.e. the same color) with a coloring compositions comprising Drimaren orange HF 2GL CDG, Drimaren Rosso HF6BL, and Drimaren Blue HFRL. It was shown that with TTT-fabrics, less pigment (20 to 30 wt.% less) was needed to provide the same color..com

## Claims

1. A fabric comprising cellulosic fibers regenerated in an alkaline spin bath.

2. The fabric according to claim 1, wherein the fabric comprises at least 20 wt%, such as at least 50 wt%, 60 wt%, 70 wt%, 80 wt%, or 90 wt%, of cellulosic fibers regenerated in an alkaline spin bath.

3. The fabric according to claim 2, wherein the fabric essentially consists of cellulosic fibers regenerated in an alkaline spin bath.

4. The fabric according to claim 1, wherein the fabric comprises 1 to 50 wt%, such as 5 to 40 wt% or 10 to 40 wt%, of the cellulosic fibers regenerated in an alkaline spin bath; preferably the fabric comprising further fibers selected from the group consisting of: man-made cellulosic fibers distinct from the cellulosic fibers regenerated in an alkaline spin bath, such as lyocell and/or viscose fibers, cotton fibers, and polyester fibers; or
wherein the fabric comprises 50 to 99 wt%, such as 70 to 97.5 wt%, or 80 to 95 wt%, of the cellulosic fibers regenerated in an alkaline spin bath, preferably the fabric comprising further fibers selected from the group consisting of: man-made cellulosic fibers distinct from the cellulosic fibers regenerated in an alkaline spin bath, such as lyocell and/or viscose fibers, cotton fibers, and polyester fibers.

5. The fabric according to any one of claims 1 to 4, wherein said fabric comprises a dyestuff, such as a reactive dye.

6. The fabric according to claim 5, wherein the fabric has been colored by a dyestuff, and wherein the fabric comprises cellulosic fibers regenerated in an alkaline spin bath and further fibers distinct from the cellulosic fibers regenerated in an alkaline spin bath, whereby providing the fabric with a mélange effect; preferably said further fibers being selected from the group consisting of: man-made cellulosic fibers distinct from the cellulosic fibers regenerated in an alkaline spin bath, such as lyocell and/or viscose fibers, cotton fibers, and polyester fibers.

7. The fabric according to any one of claims 1 to 6, wherein the fabric is a knitted fabric, such as a knitted fabric having a jersey, rib, or purl construction, or a woven fabric, such as a woven fabric having a plain weave, twill or satin construction; or
wherein the fabric is a non-woven fabric.

8. The fabric according to claim 7, wherein the fabric is a fabric having a jersey construction with a mass per unit area of 60 to 400 g/m² determined according to SS-EN 12127:1997 with a sampling procedure with load according to ISO 3801:1977, optionally a thickness of 0.5 to 2 mm according to SS-EN ISO 9073-1: 1995, and a resistance to surface pilling of at least 3, preferably at least 4, as determined according to SS-EN ISO 12945-2:2020 in a Martindale apparatus after at least 5000 rubs, such as 7000 rubs; or
wherein the fabric is a woven fabric having a thread count of 75 to 600 per square inch, such as 100 to 400 per square inch; preferably the fabric is a woven fabric with plain weave construction.

9. The fabric according to any one of claims 1 to 8, wherein the cellulosic fibers regenerated in an alkaline spin bath are fibers that, when tested by being incorporated in a flat knit fabric with a single jersey construction with a mass per unit area of 275 to 295 g/m² determined according to SS-EN 12127:1997 with a sampling procedure with load according to ISO 3801:1977, and a thickness of 1.0 to 1.3 mm according to SS-EN ISO 9073-1: 1995, provides the single jersey fabric with a resistance to surface pilling of at least 3, preferably at least 4, as determined according to SS-EN ISO 12945-2:2020 in a Martindale apparatus after at least 5000 rubs, such as 7000 rubs.

10. The fabric according to any one of claims 1 to 9, wherein the cellulosic fibers regenerated in an alkaline spin bath have a linear density of 0.5-3.0, such as 0.8 to 2.0 dtex.

11. The fabric according to any one of claims 1 to 10, wherein the cellulosic fibers regenerated in an alkaline spin bath are staple fibers; preferably the staple fibers being 15 to 75 mm long, such as 20 to 50 mm long.

12. The fabric according to any one of claims 1 to 11, wherein the alkaline spin bath comprises sodium carbonate; and/or
wherein the cellulosic fibers regenerated in an alkaline spin bath have been regenerated by spinning an alkaline, aqueous solution of cellulose into the alkaline spin bath; preferably the cellulosic fibers regenerated in an alkaline spin bath have been formed by dissolving cellulose in an alkaline solution comprising 5 to 12 wt.% sodium hydroxide, such as 6 to 10 wt.% sodium hydroxide, at a temperature of + 12°C or lower, such as -20°C to +10°C, -10°C to +5°C, or -5°C to +5°C, to form an alkaline spin dope and subsequently spinning the spin dope into an alkaline spin bath comprising 14 to 32 wt.% sodium carbonate (Na₂CO₃), such as 16 to 24 wt.% sodium carbonate (Na₂CO₃) to provide the cellulosic fibers regenerated in an alkaline spin bath.

13. The fabric according to any one of claims 1 to 12, wherein the cellulosic fibers regenerated in an alkaline spin bath have been washed in a plurality of consecutive washing steps at alkaline conditions; preferably the fibers have been washed at subsequently lower pH-value until the washing liquid has a pH value of less than 10.

14. An article comprising a fabric according to any one of claims 1 to 13, wherein the article is a home furnishing textile article, such as an article of bedding, a blanket, a towel, a table cloth, a curtain, or a cover, or a garment, such as a T-shirt, a sweatshirt, a shirt, a blouse, a dress, underwear or a lingerie.

15. Use of a cellulosic fiber regenerated in an alkaline spin bath in a fabric to provide the fabric with improved resistance to pilling; preferably the fabric being a knitted fabric, such as a knitted fabric having jersey construction, or a woven fabric.

16. Use of a cellulosic fiber regenerated in an alkaline spin bath in a fabric to provide the fabric with improved color absorption.
